# EUROPEAN PATENT APPLICATION

(11) **EP 1 443 462 A2**
(43) Date of publication of application: **04.08.2004**
(21) Application number: 04001195.9
(22) Date of filing: 21.01.2004
(51) Int. Cl.: G06T 11/60

(54) **Image editing device, method for trimming image, and program therefor**

(30) Priority: 23.01.2003 JP 2003015105
(71) Applicant: SEIKO EPSON CORPORATION, Shinjuku-ku, Tokyo 163-0811 (JP)
(72) Inventor: Nagahashi, Toshinori, Suwa-shi Nagano-ken 392-8502 (JP); Nagahara, Atsushi, Suwa-shi Nagano-ken 392-8502 (JP)
(74) Representative: Hoffmann, Eckart, Dipl.-Ing.

(57) **Abstract**

In an image editing device of the present invention, a noticing area in an image is calculated by a noticing area calculating section. Also, a trimming method is designated by a trimming rule designating section. Also, a trimming scope (shape) is designated by a trimming shape designating section, or a template is selected by a template selecting section according to the designated trimming method. Also, a distribution ratio of the noticing area in the trimming scope or the template is calculated by a noticing area error calculating section. Also, the image, the trimming scope, and the template are enlarged, contracted, and rotated by an image processing section so as to adjust the distribution ratio of the noticing area in the trimming scope or the template.
By doing this, it is possible to provide an image editing device which can trim the noticing area in the image automatically and easily.

## Description

Priority is claimed on Japanese Patent Application No. 2003-15105, filed January 23, 2003, the content of which is incorporated herein by reference.

### BACKGROUND OF THE INVENTION

### Field of the Invention

The present invention relates to an image editing device, a method for editing the image, and a computer program therefor so as to trim (cut a part of the image or clip out a part of the image) a digital image (hereinafter, "image" means the digital image) which is taken by a digital camera automatically.

### Description of Related Art

Recently, digital cameras are used popularly; thus, it is possible to load a digital image which is taken by the digital camera into a PC (personal computer), edit, and print the digital image easily. For example, it is possible to make a travel photo album easily by editing the digital image which is taken by a digital camera during the travel.

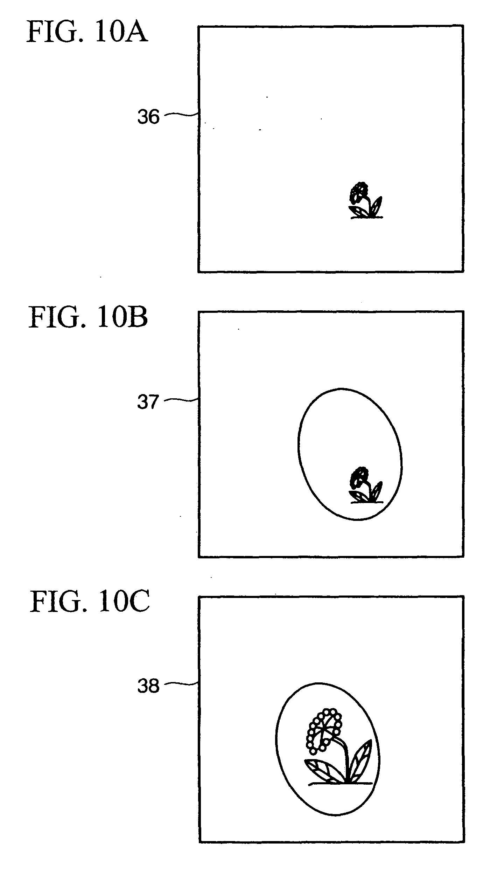

It is required quite often that a part of the image (a noticing area in the image) be trimmed and edited when the digital image is edited as shown in FIG. 10C.

Conventionally, such a trimming operation has been performed manually; that is, a noticing area (outstanding area) in the digital image has been clipped out by operation a computer mouse.

In such a manual trimming operation, it does not bother who trims digital images manually unless there are numerous pieces of digital images. However, in a case in which numerous digital images are trimmed so as to organize a photo album, such a manual trimming operation may be burdensome tasks unexpectedly.

Also, digital cameras are increasingly popular among several generations of users. Thus, some of the digital camera users are not so familiar with handling the PCs; therefore, a device which can trim the digital image more easily has been longed.

For such a trimming operation for the digital image, there is an "image synthesizing device" as a prior art which is disclosed in Japanese Unexamined Patent Application, First Publication No. 2002-10056.

The invention which is disclosed in Japanese Unexamined Patent Application, First Publication No. 2002-10056 relates to an image synthesizing device for producing a synthesized image easily in which a main image is overlapped on a background image. In such a synthesizing operation by the image synthesizing device, an outer frame and an inner frame which is disposed inside the outer frame are displayed in a sub-display area. Consequently, the picked up background image is displayed in a main display area. A trimming frame is displayed so as to correspond to the outer frame in the sub-display area. A range for moving the trimming frame which is supposed to be synthesized is designated. When a clipping operation is performed, the background image is clipped on the outer frame in the sub-display area. Next, other image (main image) is picked up so as to be displayed in the main display area. A trimming frame is displayed in the main display area so as to correspond to the inner frame of the sub-display area. A portion which is designated in the trimming frame is fitted in the inner frame of the sub-display area. Thus, a synthesized image is produced in which a main image is overlapped on the background image.

However, in the invention which is disclosed in Japanese Unexamined Patent Application, First Publication No. 2002-10056, an operator who trims manually has to clip out a trimming scope in each image and synthesize the cut (clipped-out) image. That is, in the invention which is disclosed in Japanese Unexamined Patent Application, First Publication No. 2002-10056, the operator of the trimming operation has to cut (clip out) the noticing area while acknowledging the noticing area (outstanding area) in each image which the operator intends to trim by observing visually. Therefore, trimming operation for numerous images disturbs the operator greatly. Also, such a trimming operation needs to take a lot of time; thus, it is likely that the operator for such a trimming operation may feel bothered.

### SUMMARY OF THE INVENTION

The present invention was made in consideration of the above problem. An object of the present invention is to provide an image editing device, a method for trim the image, and a computer program therefor which can trim the noticing area in the image automatically such that it is possible to trim the image easily and efficiently.

The present invention was made in consideration of the above problem. An image editing device for trimming an image according to the present invention comprises a noticing area calculating section for calculating a noticing area of an image which is an object for a trimming operation, a trimming rule designating section for designating a trimming method for trimming the noticing area of the image which is the object for the trimming operation, a trimming shape designating section for designating a shape of a trimming scope when the designating operation of the trimming scope is selected by the trimming rule designating section, a template selecting section for selecting a template which is used for the trimming operation among a template group which is memorized in advance when a using operation for the template is designated by the trimming rule designating section, a noticing area error calculating section for calculating distribution ratio of the noticing area in the trimming scope or the template, and an image processing section for enlarging, contracting, and rotating the image, the trimming scope, and the template so as to adjust the distribution ratio of the noticing area in the trimming scope or the template according to the method which is designated by the trimming rule designating section.

By such a structure, the noticing area calculating section determines the noticing area in the image which is supposed to be trimmed. A method for trimming the noticing area is designated by the trimming rule designating section. A scope (shape) which is supposed to be trimmed by the user is designated by the trimming shape designating section when a designating operation for the trimming scope is selected by the trimming rule designating section. Also, when it is selected to use the template by the trimming rule designating section, the user selects the template which is used for the trimming operation among the template group which is memorized in advance by the template selecting section. Also, a distribution ratio of the noticing area in the trimming scope or the template is calculated by the noticing area error calculating section. Also, an enlarging operation or a contracting operation for the image, the trimming scope, or the template are performed so as to adjust the distribution ratio of the noticing area in the trimming scope or the template according to a method which is designated by the trimming rule designating section by using the image processing section.

By doing this, after the trimming scope (shape) is designated and the template is selected, the noticing area is calculated according to human visual characteristics; thus, it is possible to trim the image automatically. Also, the noticing area is trimmed visually desirably according to the designated trimming scope or the template.

Also, the image editing device further comprises a center aligning section for aligning a center of the noticing area and a center of the trimming scope or a center of the template.

By such a structure, after the center of the trimming scope or the center of the template is aligned with the center of the noticing area, the extent that the noticing area is cut (the distribution ratio of the noticing area in the trimming scope or the template) is calculated by the noticing area error calculating section.

By doing this, it is possible to perform a calculating operation by the noticing area error calculating section. Also, it is possible to dispose the noticing area in the trimming scope or the template adequately.

Also, in the image editing device according to the present invention, the center of the noticing area is a crossing point of diagonal lines of a rectangle which surrounds the noticing area, and the center of the template is a crossing point of diagonal lines of a rectangle which surrounds the template.

By such a structure, the noticing area is surrounded by a rectangle. Also, the cross point of the diagonal lines of the rectangle is disposed so as to be a center in the noticing area. Also, the trimming scope or the template is surrounded by the rectangle such that the cross point of the diagonal lines is disposed so as to be a center of the trimming scope or the center of the template.

By doing this, it is possible to determine the center of the noticing area and the center of the trimming scope or the center of the template easily.

Also, the image editing device according to the present invention further comprises a noticing area threshold section which determines a threshold with reference to the noticing area having the highest attention and determines the noticing area having the attention which is higher than the threshold when the noticing area is calculated by the noticing area calculating section.

By such a structure, it is possible to determine thresholds so as to cut (clip out) the noticing areas so as to organize the noticing areas in an area such that the threshold may indicate an area which has the highest attractiveness in the calculated noticing areas, or an area which has more than a half of the highest attractiveness in the noticing area threshold section.

By doing this, it is possible to perform the trimming operation by designating a degree for the attention in the noticing area which is supposed to be trimmed.

Also, a method for trimming an image in an image editing device according to the present invention comprises the steps of calculating a noticing area of an image which is an object for a trimming operation, designating a trimming method for trimming the noticing area of the image which is the object for the trimming operation, designating a shape of a trimming scope when the designating operation of the trimming scope is selected by the trimming rule designating section, selecting a template which is used for the trimming operation among a template group which is memorized in advance when a using operation for the template is designated by the trimming rule designating section, calculating distribution ratio of the noticing area in the trimming scope or the template, and enlarging, contracting, and rotating the image, the trimming scope, and the template so as to adjust the distribution ratio of the noticing area in the trimming scope or the template according to the method which is designated by the trimming rule designating section.

By such steps, the noticing area which is supposed to be trimmed is determined in the noticing area calculating step. A method for trimming the noticing area is designated in the trimming rule designating step. Also, when the designation for the trimming scope is selected in the trimming rule designating step, the trimming scope (shape) which is supposed to be trimmed by the user is designated in the trimming shape designating step. Also, when it is selected to use the template in the trimming rule designating step, the template which is supposed to be used for the trimming operation by the user is selected among the template group which is memorized in advance in the template selecting step. Also, the distribution ratio of the noticing area in the trimming scope or the template is calculated in the noticing area error calculating step. Also, an enlarging operation or a contracting operation for the image, the trimming scope, or the template are performed so as to adjust the distribution ratio of the noticing area in the trimming scope or the template according to a method which is designated in the trimming rule designating step by using the image processing step.

By doing this, after the trimming scope (shape) is designated or the template is selected, the noticing area is calculated according to human visual characteristics; thus, it is possible to trim the image automatically. Also, the noticing area is trimmed visually desirably according to the designated trimming scope or the template.

Also, a computer program according to the present invention comprises the steps of calculating a noticing area of an image which is an object for a trimming operation, designating a trimming method for trimming the noticing area of the image which is the object for the trimming operation, designating a shape of a trimming scope when the designating operation of the trimming scope is selected by the trimming rule designating section, selecting a template which is used for the trimming operation among a template group which is memorized in advance when a using operation for the template is designated by the trimming rule designating section, calculating distribution ratio of the noticing area in the trimming scope or the template, and enlarging, contracting, and rotating the image, the trimming scope, and the template so as to adjust the distribution ratio of the noticing area in the trimming scope or the template according to the method which is designated by the trimming rule designating section.

### BRIEF DESCRIPTION OF THE DRAWINGS

FIG 1 is a block diagram for explaining a structure for devices which are provided with the image editing device according to the present invention.
FIG 2 is a view for showing image which is an object for the trimming operation graphically.
FIG 3 is a view for explaining an noticing degree (attractiveness) of an image shown in FIG 2 graphically.
FIG 4 is a view for an example of noticing area shown in FIG 3 in which a part of the noticing area which exceeds a certain threshold is cut.
FIGS. 5A and 5B are views for examples of designating operation for the trimming scope.
FIG 6 is a view for showing a first example for a template which is used in the trimming operation.
FIG 7 is a view for showing a second example for a template which is used in the trimming operation.
FIG 8 is a view for showing a third example for a template which is used in the trimming operation.
FIGS. 9A and 9B are views for showing examples in which images are distributed in the templates.
FIGS. 10A to 10C are views for showing other examples than the examples in the FIGS. 9A and 9B in which images are distributed in the templates.
FIG 11 is a flow chart for showing processing steps in the image editing device according to the present invention.
FIG 12 is a block diagram for explaining an example for the image editing device according to the present invention.

### DETAILED DESCRIPTION OF THE INVENTION

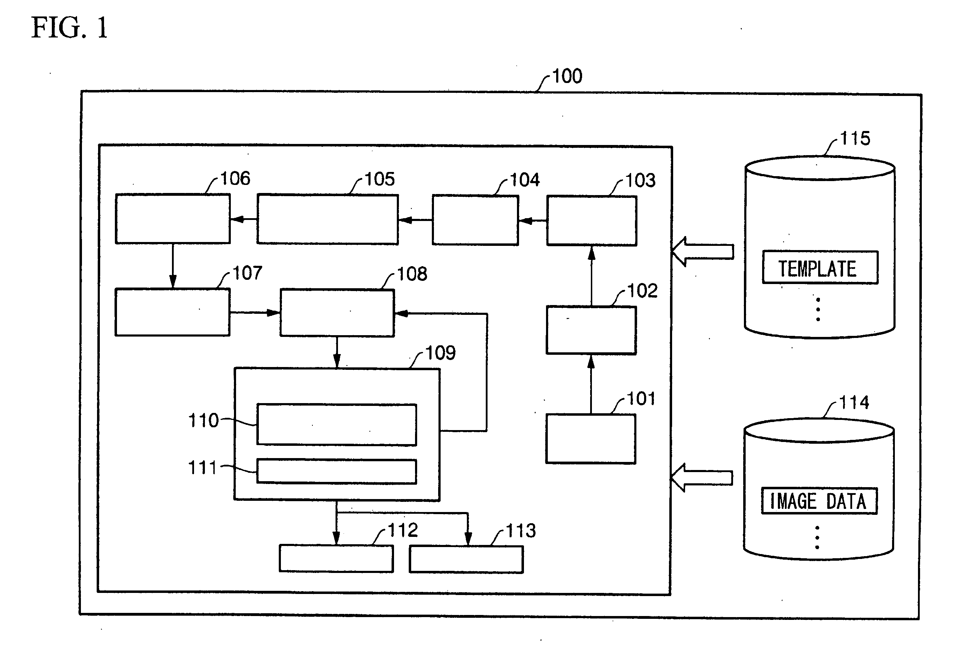

Next, embodiments of the present invention are explained with reference to drawings as follows. FIG 1 is a block diagram for explaining a structure for devices which are provided with the image editing device 100 according to the present invention. In the image editing device 100 shown in FIG. 1, each section performs following operation.

### (1) Image Selecting Section 101

An image selecting section 101 selects an image which is supposed to be an object for the trimming operation in an image memorizing section 114.

### (2) Image Reading-Out Section 102

An image reading-out section 102 reads out values such as RGB values or the likes per pixel which forms the image.

### (3) Noticing Area Calculating Section 103

A noticing area calculating section 103 calculates the noticing area in an image which is supposed to be an object in the trimming operation so as to separate the image into a plurality of areas and categorize the separated image areas according to more than two noticing degrees. For calculating such noticing areas, for example, the "attractiveness" can be used which is disclosed for an ''NOTICING AREA EXTRACTING DEVICE AND AUTOMATIC COMPOSITION DECIDING DEVICE" in Japanese Unexamined Patent Application, First Publication No. 2001-126070. Here, the attractiveness is explained generally in a later paragraph which is titled "Supplemental Explanation for the Attractiveness".

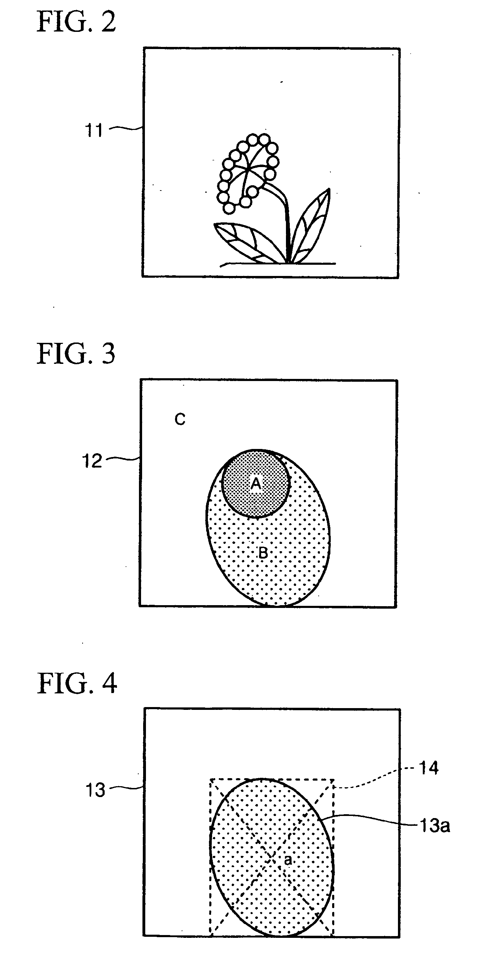

FIG. 2 is a view for showing image 11 which is an object for the trimming operation graphically. FIG. 3 is a view for explaining an noticing degree (attractiveness) of the image 11 shown in FIG. 2 graphically so as to show a pattern image 12 in the noticing area. In the pattern image 12 in the noticing area shown in FIG 3, an area A has the highest the noticing degree (attractiveness) according to the calculation such that area B have the second highest noticing degree (attractiveness) and the area C have the third highest noticing degree (attractiveness).

### (4) Noticing Area Threshold Section 104

The noticing area threshold section 104 determines thresholds so as to cut (clip out) the noticing areas so as to organize the noticing areas such that the threshold may indicate an area which has the highest noticing degree (attractiveness) in the calculated noticing areas, or an area which has more than a half of the highest noticing degree (attractiveness) in the noticing area threshold section among the noticing area which is determined by the noticing area calculating section 103. When a detail for the trimming operation is determined in a case in which the trimming scope is determined, such noticing areas to which thresholds are arranged are used.

FIG 4 is a view for an example for an image 13 which is formed by cutting the noticing area in the pattern image 12 in the noticing area shown in FIG. 3 according to the threshold (attractiveness in the area B) by using the noticing area threshold section 104. That is, in the pattern image 12 in the noticing area shown in FIG. 13, a portion having a higher noticing (attractiveness) in the area B than the threshold is clipped out. The area B and the area A are clipped. Consequently, the clipped-out areas A and B are organized unitarily; thus, it is possible to form a noticing area 13a which is supposed to be an object for the trimming operation shown in FIG 4. Furthermore, the center of the noticing area 13a to which the threshold is arranged is disposed so as to be a center of the rectangular area 14 which surrounds the noticing area 13a.

### (5) Trimming Rule Designating Section 105

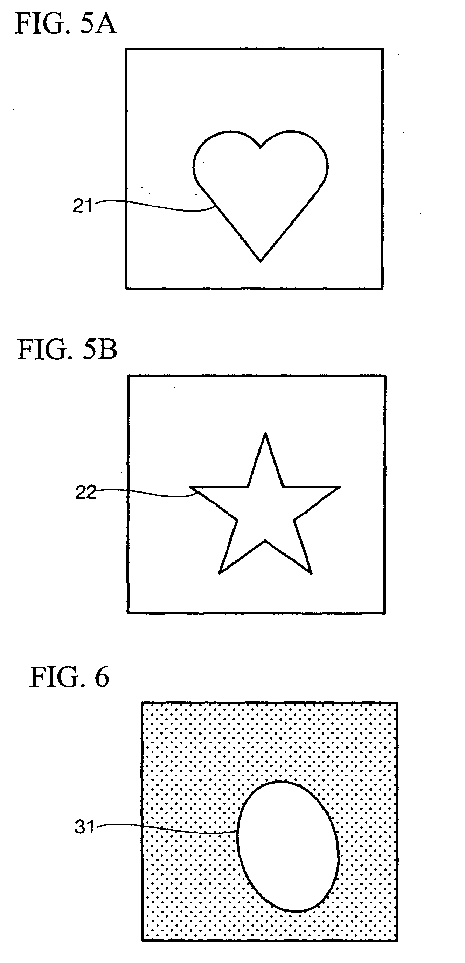

The trimming rule designating section 105 is used by a user for designating a trimming method. The user selects the trimming rule, for example, among following methods.
· An original image (for example, an image 11 shown in FIG. 2) is contracted such that the noticing area to which the threshold is arranged (for example, the noticing area 13a shown in FIG 4) be distributed in the trimming scope (for example, a range of the template shown in FIG. 6).
· The original image is rotated such that the noticing area to which the threshold is arranged be in the trimming scope.
· The trimming scope is enlarged such that the noticing area to which the threshold is arranged be in the trimming scope.
· The trimming scope is rotated such that the noticing area to which the threshold is arranged be in the trimming scope.
· The trimming scope is designated by the user in any desirable shape. Otherwise, at least a template is selected to be used with reference to the noticing area.
· The center of the trimming scope or the center of the template is shifted relatively so as to overlap the center of the noticing area.
· The image is enlarged so as to be visually desirable if the noticing area to which the threshold is arranged is smaller than the trimming scope or the template.

Here, in order to contract or enlarge the noticing area, it is possible to limit a magnification of the noticing area in a range of, for example, 98 % to 102 %. Alternatively, it is possible to magnify the noticing area to a maximum level as long as the noticing area is cut (clipped out) in the trimming scope or the template. In order to shift the trimming scope or the center of the template relatively, it is possible to limit the range such as ± 5 pixels vertically or horizontally.

### (6) Trimming Shape Designating Section 106

The trimming shape designating section 106 is used for the user to designate the trimming range in any desirable shape.

FIGS. 5A and 5B are views for examples of designating operation for the trimming scope such that the user can designate a shape 21 of the trimming scope which is shown in FIG 5A and a shape 22 of the trimming scope which is shown in FIG 5B by dragging a computer mouse on a computer display by using the trimming shape designating section 106.

### (7) Template Selecting Section 107

The template selecting section 107 selects the template for describing the trimming shape of the image.

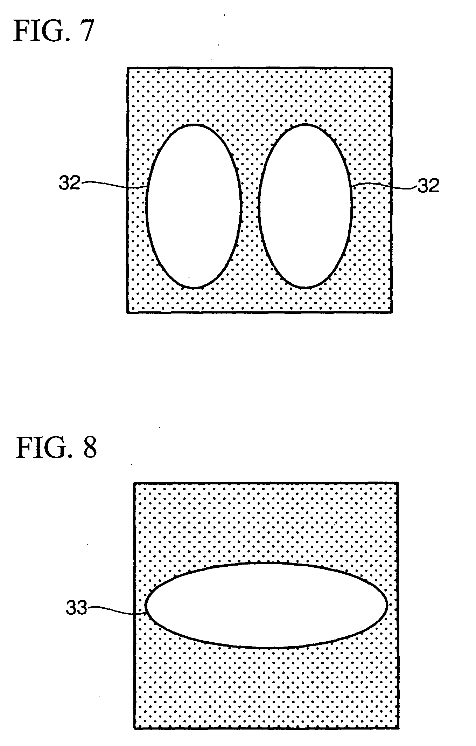

FIGS. 6 to 8 are views for showing examples for the templates which are used for the trimming operation such that the user can select the template for the trimming operation among the templates 31, 32 or 33.

### (8) Noticing Area Error Calculating Section 108

The noticing area error calculating section 108 is used for calculating a degree of the noticing area (degree of distribution in the template, or the like) to which the threshold is arranged which is cut according to the trimming scope or the template. In such a case, the noticing area is determined by the noticing area threshold section 104. Also, the template is memorized in the template memorizing section 115 so as to be selected by the user.

An error in the noticing area is calculated by using the template 31 (shown in FIG 6) as follows.
· A template 31 shown in FIG 6 is selected by the template selecting section 107.
· Next, the center of the noticing area 13a to which the threshold is arranged as shown in FIG. 4 is disposed so as to be the center of the template 31. Consequently, a degree of an area in which the noticing area 13a is cut by the template 31 (area which is included in the template 31).

Here, a method for determining the center of the template 31 is similar to a method shown in FIG 4 for example. That is, the template is surrounded by a rectangle such that a center of the diagonal lines in the rectangle is disposed so as to be the center of the template.

### (9) Image Processing Section 109

The image processing section 109 is formed by an image scaling section 110 and an image rotating section 111 so as to perform following functions.
· The image scaling section 110 changes size of a trimming scope, a template, an image in which a threshold is arranged for the noticing area, and an original image.
· The image rotating section 111 rotates a trimming scope, a template, an image in which a threshold is arranged for the noticing area, and an original image.

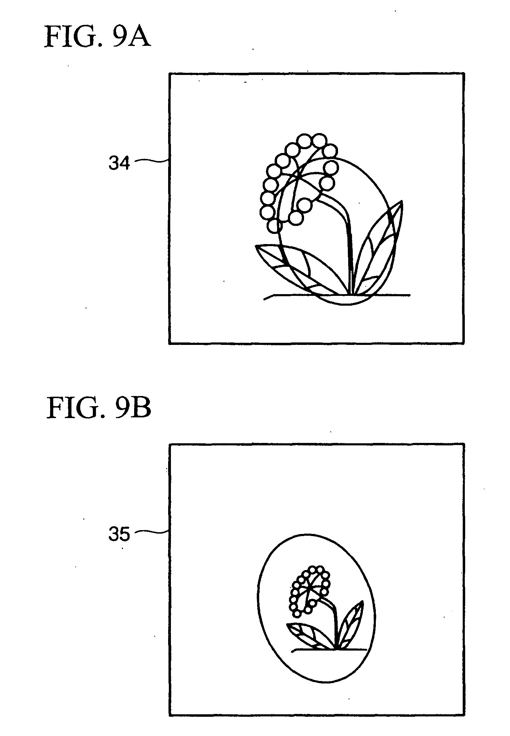

FIGS. 9A and 9B show examples in which the image is distributed in the template. In FIG 9A, an example is shown in which the image shown in FIG 2 is distributed in the template 31 which is shown in FIG. 6. In such a case, the noticing area (a portion of image which shows a flower) in the image 34 of the image is too large; therefore, a portion having a higher noticing degree (attractiveness) expands over the template.

In such a case, a contracting ratio of the noticing area 13a (shown in FIG. 4) to which the threshold is arranged is determined by the image processing section 109 and the noticing area error calculating section 108. After that the image of the flower is distributed in the template 31. By contracting the noticing area, as shown in a case for the image 35 which is shown in FIG. 9B, it is possible to trim entire noticing area so as to be included in the template 31.

FIGS. 10A to 10C are views for showing other examples than the examples in the FIGS. 9A and 9B in which images are distributed in the templates. In FIG 10B, an example is shown in which the image 37 is formed by distributing the image 36 which is shown in FIG 10A in the template 31 which is shown in FIG 6. In such a case, the noticing area (a portion of the image of the flower) of the image 10(b) of the image is too small. In such a case, a magnification of the image of the flower is determined by the image processing section 109 and the noticing area error calculating section 108 so as to be distributed in the template 21. By enlarging the noticing area in this way, it is possible to trim the noticing area such as an image 38 shown in FIG. 10C visually desirably.

### (10) Displaying Section 112

The displaying section 112 displays the trimming result.

### (11) Printing Section 113

The printing section 113 prints the trimming result.

### (12) Image Memorizing Section 114

The image memorizing section 114 memorizes an image data which is supposed to be an object for the trimming operation and the trimmed image data.

### (13) Template Memorizing Section 115

The template memorizing section 115 memorizes the template on which a trimming method is written. Examples for the template area shown in FIGS. 6 to 8.

By using the sections which are explained above, in the image editing device according to the present invention, it is possible to trim the image easily by calculating the noticing area according to the human visual characteristics, designating the trimming scope (shape), and selecting the template.

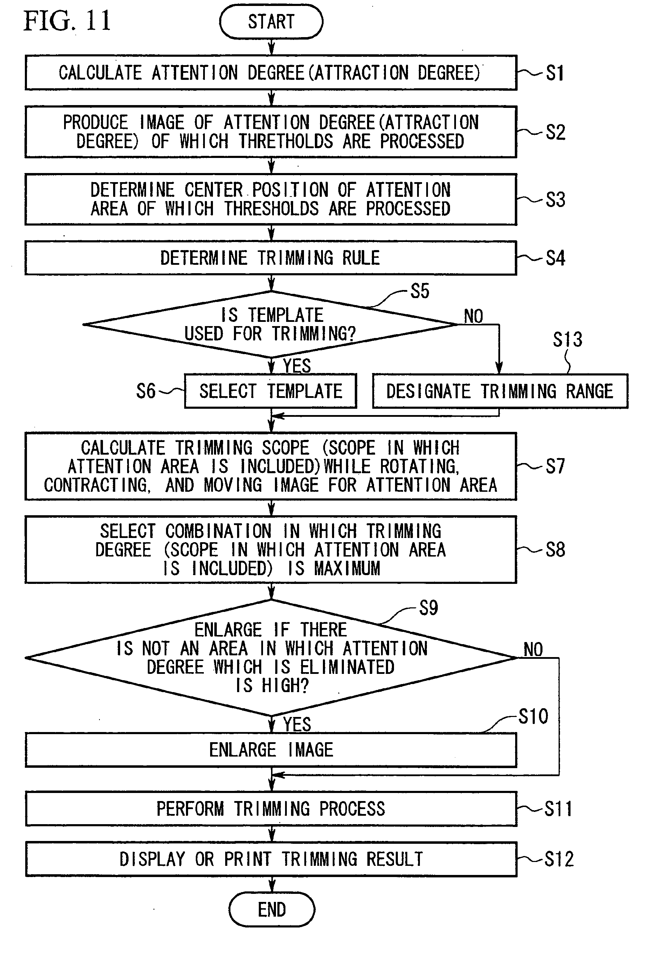

FIG. 11 is a flow chart for showing processing steps in the image editing device according to the present invention so as to select the template and trim the image. In the flow chart shown in FIG. 11, the trimming rule is established under following conditions by the trimming rule designating section 105.
· A rotating operation and a scaling operation are performed for the image which is an object for such operations such that the noticing area is distributed in the trimming scope.
· The relative position of the trimming scope and the template is moved.

Here, the steps for the trimming operations which are performed in the image editing device according to the present invention are explained below with reference to the flow chart shown in FIG 11.
(1) Step S1: The noticing degree (attractiveness) of the image which is supposed to be an object for calculating the noticing area is calculated by the noticing area calculating section 103.
   For example, the noticing degree (attractiveness) shown in FIG 2 is calculated so as to determine the pattern image 12 in the noticing area which is shown in FIG 3. In the pattern image 12 in the noticing area shown in FIG 3, an area A has the highest noticing degree (attractiveness) according to the calculation such that area B have the second highest noticing degree (attractiveness) and the area C have the third highest noticing degree (attractiveness).
(2) Step S2: The pattern image for the noticing degree (attractiveness) to which the threshold is arranged is generated by the noticing area threshold section 104.
   For example, a portion of the noticing area which exceeds a certain threshold of the attractiveness in the area B in the pattern image 12 shown in FIG. 3 is clipped out. That is, a portion of the pattern image 12 in the noticing area shown in FIG. 3 which exceeds the threshold in the area B is clipped out; thus, the area B and the area A are organized unitarily. Thus, the pattern image 13 is formed in the noticing area 13a to which the threshold is arranged as shown in FIG. 4.
(3) Step S3: The center of the noticing area to which the threshold is arranged is determined.
   For example, as shown in FIG. 4, the center of the noticing area 13a to which the threshold is arranged is disposed so as to be the center of the rectangle area 14 (a crossing point "a" of the diagonal lines) which surrounds the noticing area 13a.
(4) Step S4: The trimming rule is determined by the trimming rule designating section 105. For example, the rotating operation or the contracting operation for the original image is designated such that the noticing area to which the threshold is arranged be disposed in the trimming scope.
(5) Step S5: The trimming method for determining whether the shape of the trimming scope is designated by the user, or the template is used is determined.
(6) Step S6: When it is selected to use the template by the trimming rule designating section 105, the template which is used for the trimming operation is selected by the template selecting section 107. Examples for the templates are shown in FIGS. 6 to 8.
(7) Step S7: The center of the trimming scope or the center of the template is disposed so as to be the center of the noticing area to which the threshold is arranged. Consequently, the degree for cutting the noticing area (distribution ratio of the noticing area in the trimming scope or the template) is calculated by the noticing area error calculating section 108 while rotating, contracting, and moving the image in the noticing area by the image processing section 109.
(8) Step S8: A combination for the degrees for cutting the noticing area (distribution ratio of the noticing area in the trimming scope or the template) is selected such that the degrees for cutting the noticing area be the maximum.
(9) Step S9: It is determined whether or not the image is enlarged so as to realize a visually desirable image and a portion the image having a high noticing degree (attractiveness) should not be eliminated when there is not a portion in which a high noticing degree (attractiveness) is eliminated.
(10) Step S10: The image is enlarged such that the a portion having a high noticing degree (attractiveness) should not be eliminated.
(11) Step S11: The trimming process is performed.
(12) Step S12: The trimming result is displayed or printed.
(13) Step S13: The shape of the trimming scope is designated by the trimming shape designating section 106 when it is selected to designate the shape of the trimming scope by the trimming rule designating section 105 in the step S5.

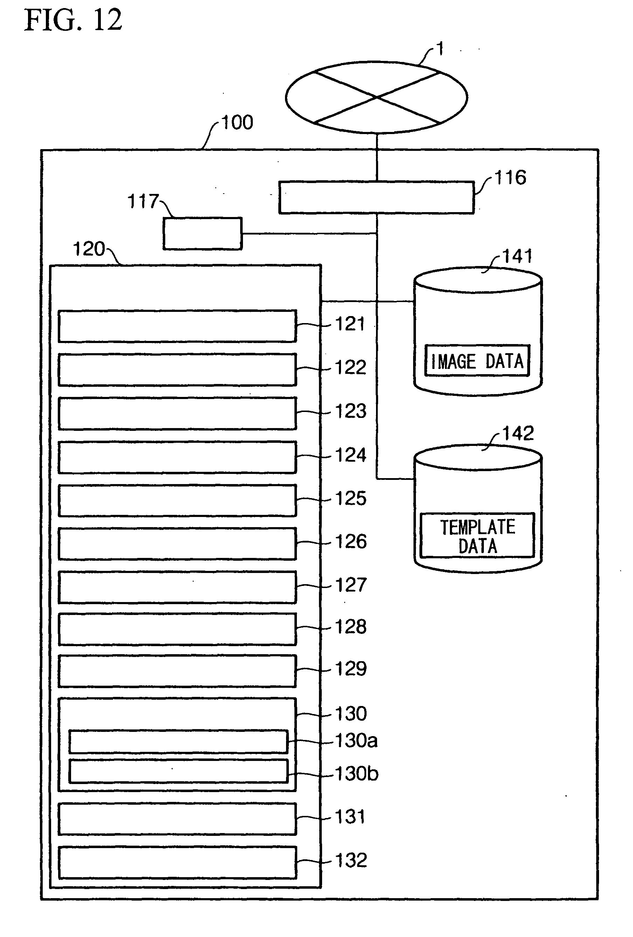

FIG 12 is a block diagram for showing an example for the image editing device according to the present invention in which only the sections which relate to the present invention are shown. In FIG 12, reference numeral 100 indicates an image editing device. Reference numeral 1 indicates a communication network such as Internet. Reference numeral 116 indicates a communication interface for connecting the image editing device 100 and the communication network 1. Reference numeral 117 indicates a controlling section which controls an entire image editing device integrally. Reference numeral 120 indicates a processing program section. Here, the image editing device according to the present invention can be realized by using a PC (personal computer).

Also, the processing program section 120 is provided with following processing sections.
· The image selecting processing section 121 selects the image which is supposed to be an object to be trimmed by an image data base 141.
· The image reading-out processing section 122 reads out values such as RGB values per pixel which forms the image which is supposed to be an object to be trimmed.
· The noticing area calculating processing section 123 calculates the noticing area of the image which is supposed to be an object to be trimmed such that the image is separated into a plurality of areas and categorized according to more than two noticing degrees. For calculating such noticing areas, for example, the "attractiveness" can be used which is disclosed for an "NOTICING AREA EXTRACTING DEVICE AND AUTOMATIC COMPOSITION DECIDING DEVICE" in Japanese Unexamined Patent Application, First Publication No. 2001-126070. Here, the attractiveness is explained generally in a later paragraph which is titled "Supplemental Explanation for the Attractiveness".
· The noticing area threshold processing section 124 determines thresholds so as to cut (clip out) the noticing areas so as to organize the noticing areas such that the threshold may indicate an area which has the highest noticing degree (attractiveness) in the calculated noticing areas, or an area which has more than a half of the highest noticing degree (attractiveness) in the noticing area threshold section among the noticing area which is determined by the noticing area calculating processing section 123.
· The trimming rule designating processing section 125 is used for the user to determine for designating the method for the trimming operation. Here, the user designates the trimming rule for rotating operation of the original image or contracting operation of the original image such that the noticing area to which the threshold is arranged should be distributed in the trimming scope.
· The trimming shape designating processing section 126 is used for the user to designate the trimming scope in any desirable shape.
· The template selecting processing section 127 selects the template which is supposed to be used for trimming the image among the template data base 142.
· The noticing area error calculating processing section 128 calculates a degree of the noticing area to be cut (distribution ratio in the template or the like) by the trimming scope or the template under condition that the threshold is arranged. In such a case, the noticing area is determined by the noticing area threshold processing section 124. The template is memorized in the template data base 142 which is selected by the user.
· The trimming processing section 129 trims the image which is supposed to be an object to be trimmed according to the trimming shape which is designated by the trimming shape designating processing section 126 or the template which is selected by the template selecting processing section 127.
· The image processing section 130 is formed by an image scaling processing section 130a and an image rotating processing section 130b. The image scaling processing section 130a changes the size of the trimming scope, the template, the image in the noticing area, or the original image. Also, the image rotating processing section 130b rotates the trimming scope, the template, the image in the noticing area, or the original image.
· The display processing section 131 displays the trimming result on the displaying device.
· The printing processing section 132 prints the trimming result.

Also, the image data for the trimming operation and the trimmed image data are memorized in the image database 141. Also, data of the template is memorized in the template database 142.

Here, the processing program section 120 may be realized by a hard ware which is used for the processing program section 120 exclusively. Also, the processing program section 120 may realize its function by loading the program (not shown in the drawing) for realizing the function in this processing section into the memory so as to execute the program such that the processing program section 120 may be formed by a common information processing device such as a memory and a CPU (central processing unit). Also, it should be understood that peripheral apparatuses such as an inputting device, a displaying device, a printing device (each of them are not shown in the drawing) are connected to the image editing device 100. Here, for such an inputting device, a keyboard or a computer mouse can be named. A CRT (Cathode Ray Tube) or a liquid crystal display device can be named for the displaying device. For a printing device, it is possible to name a laser printer, an inkjet printer, or the like.

Also, it may be acceptable that a program for realizing the function in the image editing device 100 shown in FIG. 12 is recorded in a computer-readable recording medium, the program which is recorded in the recording medium is read out by a computer system; thus, the necessary operations in the image editing device 100 according to the present invention may be realized by executing the program. Here, a "computer system" indicates a hardware such as an operation system and peripheral apparatuses.

Also, the "computer system" indicates a circumstance in which homepages are provided (or homepages are displayed) in a case in which a WWW (world-wide-web) system is used. Also, a "computer-readable recording medium" indicates recording devices such as a portable medium like a flexible disk, an optical magnetic disk, an ROM (read only memory), a CD-ROM, and a hard disk device which is built in the computer system.

Furthermore, the "computer-readable recording medium" indicates a medium which maintains the program in dynamic manner for a short period of time (transmitting medium or a transmitting wave) such as a communication line like a network like the Internet and a telephone line in which a program is transmitted via a communication line. Also, the "computer-readable recording medium" indicates a medium which maintains the program for a certain length of period such as a volatile memory in the computer system which serves as a server or a client for the above case. Also, it may be acceptable if the above program realizes a part of the above functions. In addition, it may be acceptable if the above program may be a differential file (differential program) which can be realized by combining the program with a program which is recorded in the computer system.

The embodiments of the present invention are explained above. The image editing device according to the present invention disclosed herein is susceptible to various modifications and alternative forms. Specific embodiments therefor have been shown by way of example in the drawings and detailed description. It should be understood, however, that the drawings and detailed description thereto are not intended to limit the invention to the particular form disclosed, but on the contrary, the invention is to cover all modifications, equivalents and alternatives falling within the scope of the present invention as defined by the claims.

### "Supplemental Explanation for the Attractiveness"

In the embodiments of the present invention, an "attractiveness" is used for a standard to extract the noticing area. An example of a detail for calculating such "attractiveness" is disclosed with reference to "NOTICING AREA EXTRACTING DEVICE AND AUTOMATIC COMPOSITION DECIDING DEVICE" in Japanese Unexamined Patent Application, First Publication No. 2001-126070.

Here, only a general condition is explained.

In order to extract the noticing area, the attractiveness is evaluated according to a physical feature of an original image. Here, the attractiveness is represented by parameters which indicate visual impression of the image to human eyes. The noticing area is extracted such that the noticing area which has the most outstanding evaluation result should be extracted. That is, the noticing area is evaluated with reference to the visual impression for human eyes according to the physical feature of the image. Therefore, it is possible to extract the noticing area which coincides the visual impression for human eyes. For example, if the physical feature includes a parameter such as chromatic heterogeneity, it is possible to evaluate the noticing degree according to difference of colors in several areas.

Also, in addition to the chromatic heterogeneity, the physical feature further includes parameters such as a form heterogeneity, an area heterogeneity, and a texture (pattern) heterogeneity. Therefore, it is possible to evaluate the attractiveness according to the characteristics of the original image if the attractiveness is evaluated according to at least one of the parameters which relate to the heterogeneity.

Also, for a case in which three elements for color such as hue, chromaticness, and lightness are evaluated, it is possible to evaluate such that a color which has a close chromatic area to a red color is the most outstanding color for human eyes.

Furthermore, if a spatial frequency and areas in the original image are evaluated, it is possible to evaluate the most outstanding area more accurately.

Also, the attractiveness is evaluated according to following steps.
(1) First, the original image is separated into several areas. In such a case, the original image is separated into a drawing area and a picture area. In order to separate the image into several areas, a method is employed which is disclosed for a method for detecting borders according to an "edge flow" which is disclosed in "Edge Flow: A Framework of Boundary Detection and Image Segmentation" in 1997 IEEE by W. Y Ma and B. S. Manjunath.
(2) Next, the separated drawing areas are extracted so as to evaluate the attractiveness of the areas. In such a case, the attractiveness is evaluated approximately as follows.
   · First, a heterogeneity attractiveness in each area is determined. In this case, the chromatic heterogeneity, the texture heterogeneity, the shape heterogeneity, and the area heterogeneity are determined respectively. Weighting factors are given to these heterogeneities respectively. After that, linear combination operation is performed to the weighted heterogeneities; thus, the heterogeneity attractiveness is determined in each area.
   · Next, a characteristic attractiveness is determined in each area. In this case, the chromatic attractiveness, the attractiveness of the spatial frequency, and the area attractiveness are determined. In addition, the weighting factors are given to the attractiveness so as to perform the linear combination operation to the weighted attractiveness. Thus, the characteristic attractiveness is determined in each area.
   · Next, the heterogeneity attractiveness and the characteristic attractiveness are summed in each area so as to determine a characteristic amount integration value. The characteristic amount integration value is evaluated according to a predetermined beta function so as to calculate the attractiveness.
(3) Also, a pattern drawing in which the attractiveness in the original image is evaluated is generated.

## Claims

1. An image editing device for trimming an image comprising:
a noticing area calculating section for calculating a noticing area of an image which is an object for a trimming operation;
a trimming rule designating section for designating a trimming method for trimming the noticing area of the image which is the object for the trimming operation;
a trimming shape designating section for designating a shape of a trimming scope when the designating operation of the trimming scope is selected by the trimming rule designating section;
a template selecting section for selecting a template which is used for the trimming operation among a template group which is memorized in advance when a using operation for the template is designated by the trimming rule designating section;
a noticing area error calculating section for calculating distribution ratio of the noticing area in the trimming scope or the template; and
an image processing section for enlarging, contracting, and rotating the image, the trimming scope, and the template so as to adjust the distribution ratio of the noticing area in the trimming scope or the template according to the method which is designated by the trimming rule designating section.

2. An image editing device according to Claim 1 further comprising a center aligning section for aligning a center of the noticing area and a center of the trimming scope or a center of the template.

3. An image editing device according to Claim 2 wherein;
the center of the noticing area is a crossing point of diagonal lines of a rectangle which surrounds the noticing area; and
the center of the template is a crossing point of diagonal lines of a rectangle which surrounds the template.

4. An image editing device according to any one of Claims 1 to 3 further comprising a noticing area threshold section which determines a threshold with reference to the noticing area having the highest noticing degree and determines the noticing area having the noticing degree which is higher than the threshold when the noticing area is calculated by the noticing area calculating section.

5. A method for trimming an image in an image editing device comprising the steps of:
calculating a noticing area of an image which is an object for a trimming operation;
designating a trimming method for trimming the noticing area of the image which is the object for the trimming operation;
designating a shape of a trimming scope when the designating operation of the trimming scope is selected by the trimming rule designating section;
selecting a template which is used for the trimming operation among a template group which is memorized in advance when a using operation for the template is designated by the trimming rule designating section;
calculating distribution ratio of the noticing area in the trimming scope or the template; and
enlarging, contracting, and rotating the image, the trimming scope, and the template so as to adjust the distribution ratio of the noticing area in the trimming scope or the template according to the method which is designated by the trimming rule designating section.

6. A computer program in an image editing device which trims an image comprising the steps of:
calculating a noticing area of an image which is an object for a trimming operation;
designating a trimming method for trimming the noticing area of the image which is the object for the trimming operation;
designating a shape of a trimming scope when the designating operation of the trimming scope is selected by the trimming rule designating section;
selecting a template which is used for the trimming operation among a template group which is memorized in advance when a using operation for the template is designated by the trimming rule designating section;
calculating distribution ratio of the noticing area in the trimming scope or the template; and
enlarging, contracting, and rotating the image, the trimming scope, and the template so as to adjust the distribution ratio of the noticing area in the trimming scope or the template according to the method which is designated by the trimming rule designating section.
